# EUROPÄISCHE PATENTSCHRIFT

(11) **EP 3 126 689 B1**
(45) Veröffentlichungstag und Bekanntmachung des Hinweises auf die Patenterteilung: **06.06.2018**
(21) Anmeldenummer: 14720910.0
(22) Anmeldetag: 03.04.2014
(51) Int. Cl.: F16D 1/08

(54) **DEMONTIERBARE NABENVERBINDUNG**
DEMOUNTABLE HUB CONNECTION
MOYEU AVEC CONNEXION DÉMONTABLE

(43) Veröffentlichungstag der Anmeldung: 08.02.2017
(73) Patentinhaber: Loesche GmbH, 40549 Düsseldorf (DE)
(72) Erfinder: BETTENWORTH, Jörg, 40549 Düsseldorf (DE)
(74) Vertreter: Wunderlich & Heim Patentanwälte Partnerschaftsgesellschaft mbB
(86) Internationale Anmeldenummer: PCT/EP2014/056665
(87) Internationale Veröffentlichungsnummer: WO 2015/149853

(56) Entgegenhaltungen:
- EP-A1- 1 302 685
- EP-A1- 1 564 418
- EP-A2- 1 215 400
- DE-A1- 2 166 219
- DE-A1-102008 006 489
- GB-A- 305 281
- GB-A- 402 303

## Beschreibung

Die Erfindung betrifft eine demontierbare Nabenverbindung mit einer Welle oder Achse, wobei die Nabenverbindung als Reibschlussverbindung ausgelegt ist.
Des Weiteren betrifft die Erfindung eine Nabenverbindung für eine Mahlwalzen-Mühle, wobei die entsprechende Nabenverbindung speziell zwischen einem Hydraulikhebel und einer Schwinghebelwelle oder -achse eingesetzt wird.
Darüber hinaus wird auch ein Montageverfahren für eine Nabenverbindung mit Welle oder Achse beansprucht.

Die beanspruchte demontierbare Nabenverbindung wird insbesondere im Hinblick auf eine Mahlwalzen-Mühle dargelegt, indem eine entsprechende Mahlwalze über deren Schwinghebel auf der zugehörigen Schwinghebelachse derart fixiert ist, um Torsionskräfte und Drehmomente aufzunehmen. Derartige Torsionskräfte können zum Beispiel aufgrund unterschiedlicher Höhen des zu zerkleinernden Mahlbettes entstehen. Andererseits werden auch die Kräfte für den Druck der Mahlwalze auf das zu zerkleinernde Material im Mahlbett übertragen.
Beispielhaft wird hier auf die DE 2166219 A1 verwiesen, in der eine entsprechende Mahlwalzen-Mühle mit Anlenkung der entsprechenden Mahlwalze über den auf der Schwinghebelachse fixierten Schwinghebel dargestellt ist, wobei der Schwinghebel zum Beispiel über eine hydraulische Kolbenstange kraftbeaufschlagt wird.

Die Kraft- und Drehmomentübertragung auf eine Schwinghebelachse kann bei anderen Mühlen auch mittels Hydraulikhebeln erfolgen. Bisherige Fixierungen eines Hydraulikhebels auf der entsprechenden Schwinghebelachse erforderten im Hinblick auf die zu übertragenden Drehmomente und Kräfte eine sehr aufwendige Konstruktion, wobei zum Beispiel Spannringe oder dergleichen zum Einsatz kamen. Auch war es erforderlich, für die Übertragung höherer Drehmomente und Kräfte den Durchmesser der Schwinghebelwelle zu vergrößern, was ebenso zu einer erheblichen Kostensteigerung beitrug.

Eine Zielvorgabe bei einer entsprechenden Mahlwalzen-Mühle war es daher, eine demontierbare Nabenverbindung für die Fixierung eines Hydraulikhebels auf einer Schwinghebelachse beziehungsweise -welle zu erreichen, die in Relation zum Durchmesser der Welle beziehungsweise der Achse höchste Torsionsmomente übertragen kann. Hierbei sollte eine kostengünstige Konstruktion und Fertigung und eine relativ einfache Montage berücksichtigt werden.

Formschlüssige Lösungen wie eine Stirnverzahnung (Hirth-Verzahnung), Passfedern oder eine Vielkeilwelle mussten wegen unzureichender Tragfähigkeit im Hinblick auf die zu übertragenden Kräfte und Drehmomente ausgeschlossen werden.
Einfache Reibschlussverbindungen wie Stahl auf Stahl mit Haftreibbeiwerten von µ von etwa 0,12 waren ebenfalls auszuschließen.
Eine andere Alternative bei Reibschlussverbindungen von Stahl auf Stahl mit Hilfe von Schrumpfscheiben wären theoretisch für höhere Drehmomentübertragungen möglich gewesen, wobei sich jedoch die Belastung entsprechender Schwinghebelachsen als zu hoch herausgestellt hat und die Herstellung eines entsprechenden Schwinghebels aus adäquatem Material zu teuer geworden wäre.
Nach Möglichkeit sollte das Material des Schwinghebels aus einem relativ günstigen Guss, insbesondere Sphäroguss, bestehen.

Um eine Reibschlussverbindung mit deutlich höherem Haftreibbeiwert µ etwa im Bereich 0,4 bis 0,8 zu erreichen, ist es bei ebenen Flanschverbindungen bekannt, mit Hartpartikeln beschichtete Platten als Zwischenlageelemente einzusetzen, sodass eine Art Mikroverzahnung geschaffen wird.
Flanschverbindungen mit reibwerterhöhenden Materialien, insbesondere mit Hartpartikeln beschichteten Platten als Zwischenlageelemente, sind unter anderem durch SKF bekannt geworden. Abhängig vom Anwendungsfall kann zum Beispiel bei einem Anpressdruck von etwa 80 bis 90 MPa ein Reibwert µ im Bereich von 0,6 und höher erreicht werden. Das bedeutet zum Beispiel, dass bei einer derartigen Flanschverbindung der benötigte Anpressdruck für die Verbindungselemente wesentlich niedriger angesetzt werden kann als bei üblichen Stahl auf Stahl oder Stahl auf Guss Verbindungen.

Ähnliche Zwischenlageelemente mit Hartpartikeln sind auch von ESK Ceramics bekannt. Dort wird zum Beispiel eine sehr dünne Metallfolie beidseitig mit DiamantPartikeln in einer Nickelmatrix beschichtet.
Ein weiteres Beispiel ist von AHC-Oberflächentechnik_in der EP 1 564 418 A1 beschrieben. Bei AHC wird als ein_Beispiel für eine reibungserhöhende Schicht ein chemischer Nickelauftrag mit eingelagerten Silizium-Karbiden vorgesehen.
Die Erzeugung einer reibwerterhöhenden Schicht ist auch Gegenstand der EP 0 961 038 B1.
Für einen direkten Auftrag einer reibwerterhöhenden Schicht auf einer Metallfläche ist es von Efc plasma GmbH bekannt, Hartpartikel wie Diamant-Partikel oder Silizium-Karbid-Partikel mittels eines Plasmastrahlverfahrens mit hoher Energie auf die Metalloberfläche zu schießen, wobei die Hartpartikel direkt in die Metalloberfläche einschmelzen.
Eine andere Möglichkeit für das Erzeugen einer reibwerterhöhenden Schicht ist durch das Fraunhofer Institut IWS, Dresden, bekannt, wobei thermisch gespritzte Hartmetallschichten angewandt werden.

In der GB 402 303 A ist eine demontierbare Nabenverbindung beschrieben, die ein unteres Klemmteil und ein oberes Klemmteil aufweist und mittels zweier Spanneinrichtungen auf einer Welle verspannbar ist.
Es ist auch eine Mikroverzahnung mit reibwerterhöhender Schicht zwischen den zwei Klemmteilen und der Welle vorhanden. Die Flächen, die bei dieser bekannten Nabenverbindung miteinander verspannt werden sollen sind jedoch mit einem harten, feinkörnigem Pulver ausgestattet, um die Reibungskräfte zu erhöhen, wobei das Pulver vorher mit einer Flüssigkeit oder einem Kunststoffmaterial vermischt wurde, um besser auf den Flächen anhaften zu können.
Bei dieser bekannten Nabenvorrichtung wird daher eine direkte Mikroverzahnung auf den zu verspannenden Fläche gewählt. Die Behandlung der entsprechenden Flächen mit einer direkten Mikroverzahnung ist aber meist teuer und kompliziert.

Aufgabe der Erfindung ist es , eine demontierbare Nabenverbindung mit einer Welle oder Achse als Reibschlussverbindung zu schaffen, die eine kompakte, gewichtsreduzierende Konstruktion mit hoher Belastung zur Kraft- und Drehmoment-übertragung ermöglicht, wobei eine Kostenreduzierung im Vergleich zu herkömmlichen Systemen erreicht werden soll.

Diese Aufgabe wird gemäß der Erfindung bei einer demontierbaren Nabenverbindung mit Welle mittels der Merkmale des Anspruches 1 gelöst. Im Hinblick auf eine Nabenverbindung bei einer Mahlwalzen-Mühle wird dies durch die Merkmale des Anspruches 9 erreicht und bei einem Montageverfahren für eine Nabenverbindung mit Welle mittels der Merkmale des Anspruches 13.

Ein wesentlicher Kerngedanke ist es dabei, eine hülsenartige Reibschlussverbindung zwischen den Klemmteilen des Nabenbauteils und der Welle oder Achse derart zu schaffen, dass eine indirekte Mikroverzahnung mittels einer reibwerterhöhenden Schicht erreicht und eingesetzt wird.
In bevorzugter Weise werden hierbei bei einer indirekten Mikroverzahnung zwei oder mehrere mit einer Hartpartikelbeschichtung versehene Materialschalen, die insbesondere Halbschalen sind, zwischen den Klemmteilen und der Welle eingesetzt.

Bei einer direkten Mikroverzahnung für die Reibschlussverbindung zwischen den Klemmteilen des Nabenbauteils und der Welle kann dies bevorzugt durch eine Hartpartikelbeschichtung auf der Innenfläche der zwei Klemmteile oder auf der Außenfläche der entsprechenden Welle realisiert werden, wobei auch eine Hochgeschwindigkeits-Spritztechnologie für die Hartpartikelbeschichtung eingesetzt werden kann.

Der Einsatz einer derartigen Mikroverzahnung für die Reibschlussverbindung zwischen Klemmteilen des Nabenbauteils und der Welle führt im Wesentlichen nur zu einer elastischen Verformung des Gegenstückes, sodass auch bei einer Demontage der Nabenverbindung eine Wiederverwendung der vorher miteinander verspannten Baugruppen möglich ist.

Es hat sich gezeigt, dass beim Einsatz einer derartigen reibwerterhöhenden Schicht zwischen Klemmteilen und Welle die Montage-Druckbelastung auf die Welle so weit reduziert werden kann, dass die in der Welle oder Achse auftretenden Materialspannungen in einem beherrschbaren und akzeptablen Bereich liegen.
Dies kann auch mit an die Belastungen angepassten Hohlwellen realisiert werden, wodurch eine erhebliche Gewichtseinsparung erreicht wird.

Bei der Verwendung von Halbschalen mit beidseitiger Hartpartikelbeschichtung wird die winkelmäßige Erstreckung der Halbschalen etwa mit 160° bis 175° Überdeckung der Welle oder Achse ausgelegt, um beim gleichmäßigen Verspannen der zwei Klemmteile des Nabenbauteils ein gegenseitiges Anstoßen der Halbschalen zu vermeiden und zumindest einen minimalen Spaltabstand im fertig montierten Zustand aufrecht zu erhalten.

Die Halbschalen können in Längsrichtung der Achse der Welle gesehen auch als Halbschalenstreifen angeordnet werden, insbesondere wenn die Druckbelastung seitens der Klemmteile des Nabenbauteils über umlaufende Ringstege auf die Halbschalenstreifen aufgebracht wird.

Um beim Verspannen der Klemmteile des Nabenbauteils eine Gleitbewegung der Halbschalen auf der Welle zu verhindern, beziehungsweise zu minimieren, wird vorteilhafter Weise der Durchmesser der zwei Klemmteile des Nabenbauteils geringfügig größer gewählt als der Nenndurchmesser der Außenfläche der Halbschalen oder Halbschalenstreifen im Falle der indirekten Mikroverzahnung.

Bei direkter Mikroverzahnung wird der Durchmesser der zwei Klemmteile geringfügig größer gewählt, als der Durchmesser der mit einer Hartpartikelbeschichtung versehenen Welle oder Achse.
Bei dieser Auslegung setzt das Verspannen der zwei Klemmteile des Nabenbauteils theoretisch mit einer Linienberührung gegenüber der entsprechenden Fläche der Halbschale ein, wobei sich bei zunehmender Montagespannung die Schenkel der Klemmteile mehr und mehr um die Welle beziehungsweise Achse schmiegen. Aufgrund dieser Maßnahme kommt es nur gegebenenfalls in manchen Zonen zu sehr geringen Gleitverschiebungen der Halbschalen.

Montagemäßig sind die zwei Klemmteile des Nabenbauteils mit zwei Spanneinrichtungen ausgestattet, die als Bolzen- oder Schraubenreihen ausgelegt sein können, wobei die auf die Spanneinrichtungen aufgebrachten Anzugskräfte möglichst durch eine Montageautomatik gleichmäßig und synchron aufgebracht werden, um Gleitbewegungen zu verhindern.

Um eine gleichmäßige Belastung der Druckflächen der Klemmteile gegenüber den Halbschalen zu erreichen, sind die Randbereiche der Innenflächen der Klemmteile mit tieferen Hinterschneidungen versehen und dadurch aufgeweicht, sodass eine Art Ringstege entstehen, über welche die Druckkräfte auf die Halbschalen und Welle gleichmäßig übertragen werden können.

Als Hartpartikelbeschichtung wird bevorzugter Weise eine Nickelmatrix mit eingebrachten Hartpartikeln verwendet oder eine Schicht auf Wolfram-Karbid-Basis.

Die Materialstärke der Halbschalen oder Halbschalenstreifen kann abhängig vom Anwendungszweck und vom Durchmesser der Welle oder Achse bevorzugt bei etwa 1mm bis 10mm liegen. Hierbei kann die Hartpartikelbeschichtung miteinbezogen sein. Als Basismaterial der Halbschalen kann zum Beispiel ein Stahl oder Blech gewählt werden. Ziel ist es, die Halbschalen so dünn wie möglich zu machen.

Beim Einsatz von Metallfolien sind auch Materialstärken im Bereich 0,1 mm bis 1 mm denkbar.

Im Hinblick auf die Verwendung einer erfindungsgemäßen demontierbaren Nabenverbindung zwischen einem Hydraulikhebel und einer Schwinghebelwelle oder -achse der Mahlwalze einer Mahlwalzen-Mühle oder zur möglichst gleichmäßigen Übertragung des vom Hydraulikhebel resultierenden Torsionsmomentes auf die beiden Klemmteile ist eine spezielle Formgebung für den Hydraulikhebel konzipiert.

Der Hydraulikhebel weist aus diesem Grund einen mittigen Hebelsteg für die zwei miteinander verspannten Klemmteile auf, wobei zusätzlich ein außenliegender Hebelsteg vorgesehen ist. Der außenliegende Hebelsteg ist dabei entsprechend den Klemmteilen mit zwei gegeneinander gerichteten Kontaktflächen ausgestattet, die erst während des Verspannens der Klemmteile in Kontakt miteinander gelangen, wobei diese Kontaktflächen weiter vorgespannt werden, um eine möglichst gleichmäßige Übertragung eines vom Hydraulikhebel resultierenden Torsionsmomentes auf die Klemmteile zu erreichen.

Die besondere Formgebung und Gestaltung zu dem letztgenannten Zweck liegt in der Schaffung einer etwa P-förmigen Öffnung zwischen dem mittleren und dem außen liegenden Hebelsteg, was sich durch Berechnungen bestätigen ließ.

In einer anderen Formgestaltung könnte der Hydraulikhebel an Stelle des mittigen Hebelstegs mit einem außenliegenden Hebelsteg ausgestattet sein, der das obere Klemmteil mit dem oberen Bereich des Hydraulikhebels verbindet. Auch hierbei richtet sich die empirische Formgebung danach, Torsionsmomente möglichst gleichmäßig auf die Klemmteile übertragen zu können.

Im Rahmen der erfindungsgemäßen Nabenverbindung konnte trotz der Forderungen, hohe Drehmomente über den Hydraulikhebel übertragen zu können, für den Hydraulikhebel das gewichtsmäßig leichtere Material als Gussmaterial und speziell als Sphäroguss gewählt werden. Dies führt auch zu einer kostengünstigen Herstellung.

Das Vorspannen der im außenliegenden Hebelsteg vorgesehenen Kontaktflächen wird über zwei oder mehrere Schraubenbolzen realisiert, wobei auch hierbei die Anzugsmomente sehr gleichmäßig aufgebracht werden sollen.

Beim Realisieren eines Montageverfahrens für die beanspruchte Nabenverbindung mit einer Welle oder Achse wird dies zunächst durch Anordnen oder Aufsetzen der Halbschalen oder Halbschalenstreifen auf die Welle oder Achse durchgeführt.
Es folgt anschließend ein Fixieren der Halbschalen oder Halbschalenstreifen auf der Welle oder Achse, wobei sich hierfür das Aufbringen eines Haltebandes über 360° und mehr eignet.
Nachfolgend werden das obere und untere Klemmteil des Nabenbauteils auf und um die Halbschalen oder Halbschalenstreifen aufgebracht. Auf der Stirnseite der Welle beziehungsweise auf deren Ende ist eine Führungsschiene plaziert, die präzise in im Wesentlichen vertikal verlaufende Nuten der Klemmteile eingreift. Mittels dieser Führungsschiene können die Klemmteile winkelmäßig zueinander exakt ausgerichtet werden und auch deren Axialfixierung durchgeführt werden. Die Führungsschiene beziehungsweise Montageleiste kann mittels Spannhülsen sehr exakt auf der Stirnfläche der Welle positioniert werden. Die hierdurch erreichte axiale und winkelmäßige Anordnung der Teile erfolgt vor dem eigentlichen Spannvorgang von zwei gegenüberliegenden durch Spannbolzen gebildete Verspanneinrichtungen.
Anschließend werden die zwei Klemmteile mittels mehrerer Spanneinrichtungen gleichmäßig und synchron gegen die Halbschalen oder Halbschalenstreifen und die Welle beziehungsweise Achse verspannt, bis ein Restspalt zwischen den zwei Klemmteilen bestehen bleibt.
In dieser Phase gelangen die zwei Kontaktflächen des außen liegenden Hebelsteges miteinander in Berührung und werden mittels einer Vorspanneinrichtung weiter vorgespannt.

Aufgrund des geringfügig größer gewählten Durchmessers der Klemmteile des Nabenbauteils in Relation zum Außendurchmesser der Halbschalen oder Halbschalenstreifen beziehungsweise der Welle, wird zunächst aus einem Linienkontakt heraus das weitere Verspannen der Klemmteile gegeneinander durchgeführt, wobei dieses Verspannen ohne wesentliches Gleiten der Halbschalen gleichmäßig über den Bereich von etwa 180° fortgesetzt wird.

Das erfindungsgemäße Prinzip besteht im Kerngedanken darin, zwei mit Hartpartikeln beschichtete Halbschalen als Zwischenlageelemente mit dem Nabenbauteil auf die Welle oder Achse zu pressen. Hierbei ist eine gleichmäßige Druckbeaufschlagung zu beachten, dass Gleitbewegungen vermieden werden. Abhängig vom Anwendungsfall und zum Beispiel dem Einfluss der Oberflächenpressung mit einem Durchschnittswert von etwa 80 bis 90 MPa, kann der dabei erreichte Haftreibbeiwert µ etwa im Bereich von 0,6 bis 0,8µ liegen.
Obwohl dieses Prinzip auch mittels Schrumpfscheiben oder andere hydraulische Presselemente möglich erscheint, scheiden diese Alternativen aus.
Einerseits ist dies damit begründet, dass eine entsprechende Hydraulik für die Anwendung zum Beispiel bei Kohle-Mahlanlagen zu anfällig und zu teuer ist. Im Falle von Schrumpfscheiben können die Durchmessertoleranzen nicht eingehalten werden. Diese sind aber erforderlich, um bei den vorgegebenen Anzugsmomenten für die Spanneinrichtungen einen definierten Oberflächendruck auf die Welle beziehungsweise Achse zu erhalten.
Die entsprechende Nabenverbindung gestattet es auch, eine Hohlwelle zu verwenden, sodass in dieser Hinsicht eine Gewichtsersparnis erreicht wird.

Die beanspruchte demontierbare Nabenverbindung kann daher in einer kostengünstigen Herstellungsweise und mit einfacher Montage realisiert werden, wobei im Hinblick auf den Durchmesser der Welle oder Achse die Übertragung höherer Torsionsmomente möglich ist.

Die Erfindung wird nachfolgend anhand weitgehend schematischer Darstellungen und eines Beispieles noch näher erläutert.
Im Zusammenhang mit einer Mahlwalzen-Mühle wird hierbei auf das Beispiel einer ausschwenkbaren Mahlwalze Bezug genommen, wie es in der eingangs genannten DE 2166219 dargestellt ist. Das Beispiel der demontierbaren Nabenverbindung mit einer Welle oder Achse wird anhand eines Hydraulikhebels näher ausgeführt. Der in dem Beispiel aufgezeigte und in den Figuren dargestellte Hydraulikhebel bezieht sich auf eine Ankopplung mittels einer hydraulisch betätigbaren Kolbenstange im oberen Bereich des Hydraulikhebels. Die demontierbare Nabenverbindung selbst ist im unteren Bereich des Hydraulikhebels dargestellt.

Es zeigen:
- Fig. 1:: eine Seitenansicht auf einen Hydraulikhebel in Achsrichtung, wie er beispielsweise bei einer Mahlwalzen-Mühle mit der hier beanspruchten Reibschlussverbindung zwischen dem Nabenbauteil und der entsprechenden Achse eingesetzt werden kann, wobei die fertig gestellte Nabenverbindung gezeigt ist;
- Fig. 2:: eine um 90° gedrehte Ansicht auf den Hydraulikhebel nach Figur 1 in Pfeilrichtung I;
- Fig. 3:: eine schematische Schnittdarstellung längs der Linie A - A im Bereich zwischen den Klemmteilen des Hydraulikhebels und dem Endbereich einer Welle oder Achse, auf welcher ein Schwinghebel für eine entsprechende Mahlwalze fixiert sein kann;
- Fig. 4:: eine perspektivische Ansicht des Hydraulikhebels nach Figur 1 beziehungsweise 2 mit dem Endbereich der Welle;
- Fig. 5:: die schematische Darstellung des geringfügig größeren Durchmessers eines oberen Klemmteils gegenüber einer durchmesser-kleineren Welle bei Beginn des Verspannens eines oberen und unteren Klemmteils gegenüber den um die Welle vorgesehenen Halbschalen oder Halbschalenstreifen; und
- Fig. 6:: die schematische Darstellung des Beispiels nach Figur 5 am Ende des Verspannvorgangs der Klemmteile gegenüber der Welle.

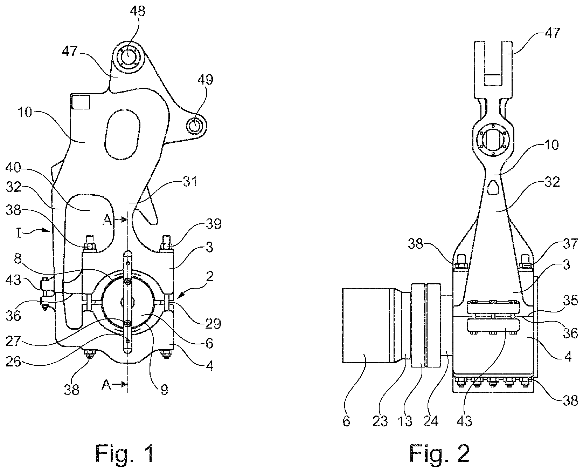

Die Darstellung nach Figur 1 zeigt einen Hydraulikhebel 10, mit Blickrichtung in Achsrichtung einer Hohlwelle 6, der im Endbereich der Hohlwelle 6 mit Reibschlussverbindung aufgebracht ist.
Der Hydraulikhebel 10 weist einen mittigen Hebelsteg 31 auf, der nach unten gerichtet ein oberes Klemmteil 3 hat, das gegen eine obere, auf der Welle 6 angeordnete Halbschale 8 anliegt. Komplementär dazu greift von unten ein unteres Klemmteil 4 gegen eine um den unteren Bereich der Welle 6 vorgesehene untere Halbschale 9. Die untere 9 und die obere Halbschale 8 werden montagemäßig zum Beispiel mittels eines Haltebandes um die Welle 6 gelegt und damit fixiert.
Der dargestellte Hydraulikhebel 10 weist einen äußeren Hebelsteg 32 auf, der etwa im Bereich des unteren Endes des oberen Klemmteils 4 zwei Kontaktflächen 35, 36 (Figur 2) hat, die während des Verspannens des oberen und unteren Klemmteils 3, 4 miteinander in Berührung gelangen und in dieser Phase mittels einer Vorspanneinrichtung 43 weiter vorgespannt werden.

Die Halbschalen 8 und 9 sind beidseitig mit einer reibwerterhöhenden Schicht, insbesondere einer Hartpartikelschicht, ausgestattet. Hierdurch kann bei dem gleichmäßigen Anziehen der Spanneinrichtungen 38 und 39 über deren Mutter-SchraubenVerbindungen ein Anpressen der Halbschalen 8, 9 auf der Welle 6 durchgeführt werden, so dass eine Mikroverzahnung mit den glatten Metallflächen der Welle 6 und mit den Innenflächen der Klemmteile 3, 4 entsteht.
In Relation zur runden, hohlen und oberflächenglatten Welle 6 wird mittels dieser Mikroverzahnung der Haftreibwert wesentlich erhöht, wobei abhängig vom Anwendungsfall und unter anderem der Oberflächenpressung Haftreibwerte zwischen 0,6 und bis 0,8µ erreicht werden können. Dies wiederum gestattet es, den auf die zwei Klemmteile 3, 4 des Nabenbauteils 2 aufgebrachten Anpressdruck wesentlich geringer auszulegen als dies bei einer üblichen Stahl auf Stahl Verbindung mit einem Haftreibwert im Bereich von etwa 0,12µ möglich ist.

Der Verspannvorgang der zwei Klemmteile 3, 4 erfolgt üblicherweise definiert bis zu einem geringfügigen Restspalt 29. Dieser Restspalt 29 und die winkelmäßige Erstreckung der Halbschalen 8, 9 über einen Bereich von 160 bis etwa 175° auf der Oberfläche der Welle 6, sichert ein weitgehend gleitfreies Verspannen der Halbschalen 8, 9 oder Halbschalenstreifen in Relation zur Welle 6 und den Innenflächen der Klemmteile 3, 4 zu.

Es wird darauf hingewiesen, dass gleiche Bezugszeichen in allen Figuren gleiche Bauteile und Baugruppen betreffen.

In den weiteren Figuren 2, 3 und 4 wird deutlich, dass die demontierbare Nabenverbindung mit dem Nabenbauteil 2 am Ende der hohlen Welle 6 vorgesehen und dort verspannt ist.

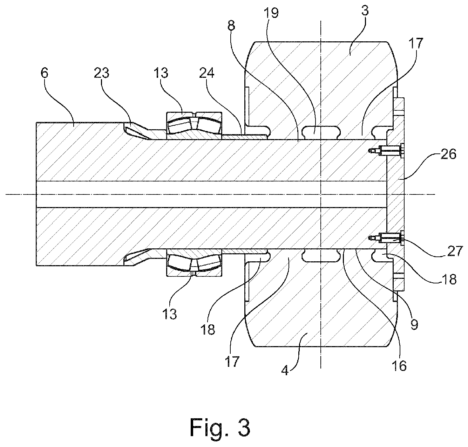

In Figur 2 und 3 ist gezeigt, dass der Endbereich der Welle 6 selbst ein Walzenrollenlager 13 aufweist, über das eine Lagerung der Schwenkhebelwelle gegenüber dem Mühlengehäuse oder gegenüber einem Mühlenständer möglich ist.
Über Distanzhülsen 23 und 24 findet eine Axialabstützung sowohl des Walzenrollenlagers 13 als auch der Klemmteile 3 und 4 des Nabenbauteils 2 statt. In der endseitigen Stirnfläche der Welle 6 ist im Beispiel eine Montageleiste 26 mittels Schraubverbindungen 27 fixiert, wodurch einerseits die axiale Lage des Hydraulikhebels 10 in diesem Beispiel festgelegt werden kann. Primär erfolgt mittels der Montageleiste 26 auch die exakte Winkelausrichtung der zwei Klemmteile 3 und 4. Die Montageleiste 26 fungiert hierbei in Art einer Führungsschiene, die in ihren Endbereichen sehr genau in Nuten angeordnet ist, die in den Klemmteilen 3 und 4 eingearbeitet sind. Die Montagleiste 26 ist auf der Stirnfläche der Welle 6 für diese Zwecke mittels Spannhülsen exakt positioniert. Diese Fixierung der stirnseitigen Teile mittels der Montageleiste 26 wird vor dem Verspannen der Schraubbolzen 37 der beiden Spanneinrichtungen 38, 39 vorgenommen.

In der Figur 2 ist erkennbar, dass die Vorspanneinrichtung 43 im Beispiel aus drei verspannbaren Schraubbolzen besteht. Im oberen Bereich des Hydraulikhebels 10 ist ein Lagerauge 48 dargestellt, was in einer Ankopplungsgabel 47 eingebracht ist. Lagerauge 48 und Gabel 47 dienen zur Ankopplung des Endbereichs einer Kolbenstange, welche zum Beispiel über einen Hydraulikzylinder (nicht gezeigt) kraftbeaufschlagbar ist und hierdurch ein entsprechendes Drehmoment über den Hydraulikhebel 10 auf die Welle 6 und den darauf fixierten Schwinghebel einschließlich Mahlwalze eingeleitet werden kann.
Das Lagerauge 49 (Figur 1), das im montierten Zustand des Hydraulikhebels 10 von dem Mühlengehäuse wegweist, dient zur Anbringung einer zum Beispiel hydraulisch betätigbaren Zugstange, um mittels eines Verschwenkens des Hydraulikhebels 10 nach außen, abgewandt vom Mühlengehäuse, ein Ausschwenken einer Mahlwalze aus dem Mühlengehäuse zu ermöglichen.

Die Darstellung nach Fig. 3 zeigt einen axialen Schnitt längs der Linie A-A nach Fig. 1.
Im Endbereich der Hohlwelle 6 wird zunächst die obere Halbschale 8 und die untere Halbschale 9, welche beidseitig eine Hartpartikelbeschichtung aufweisen, aufgebracht und mit einem umlaufenden Halteband um die Welle 6 fixiert.
Es wird dann der obere Klemmteil 3 des Hydraulikhebels 10 auf der oberen Halbschale 8 und der untere Klemmteil 4 mit der unteren Halbschale 9 gegen die Welle 6 im noch nicht verspannten Zustand angeordnet.
Oberer und unterer Klemmteil 3, 4 können mit ausreichendem Durchmesserabstand auch vormontiert sein und in Achsrichtung auch die Welle 6 mit den Halbschalen 8, 9 geschoben werden.
Die axiale präzise Fixierung der Klemmteile 3, 4 und auch deren winkelmäßige Ausrichtung erfolgt mittels einer Montageleiste 26. Die auf der Stirnseite der Welle 6 mittels Spannhülsen exakt positionierte Montageleiste liegt mit ihrem oberen und unteren Endbereich in etwa vertikal gegenüberliegenden Führungsnuten der Klemmteile 3 beziehungsweise 4. Mittels der Montageleiste 26 ist daher auch eine präzise Winkelausrichtung der Klemmteile 3, 4 zueinander sowie zur Welle 6 realisierbar. Erst in einem nachfolgenden Schritt werden dann die Spanneinrichtungen 38, 39 gegen die Halbschalen 8, 9 und die Welle verspannt.

Die Nabenanlagefläche 16 wird gegen die Halbschalen 8 und 9 im Hinblick auf eine möglichst gleichmäßige Belastung der Druckfläche mit tieferen Hinterschneidung 18, 19 versehen. Der Randbereich der Klemmteile 3, 4 wird hierdurch etwas aufgeweicht, wodurch eine Art Ringstege 17 gebildet werden. In Achsrichtung gesehen weisen beide Klemmteile 3, 4 durch eine mittige Hinterscheidung 19 beabstandete Ringstege 17 auf.
Anstelle einer über die gesamte axiale Länge des Klemmteils 3 reichende Halbschale 8, ist es möglich, auch zwei Halbschalenstreifen auf der Welle 6 aufzubringen, die im Bereich der mittigen Hinterschneidung 19 zueinander einen axialen Abstand aufweisen.

In der Schnittdarstellung nach Fig. 3 sind auch die Distanzhülsen 24, und 23 dargestellt, mittels derer die Abstützung des Walzenrollenlagers 13 gegenüber den benachbarten Baugruppen beziehungsweise flanschartigen Abstützflächen realisiert wird.

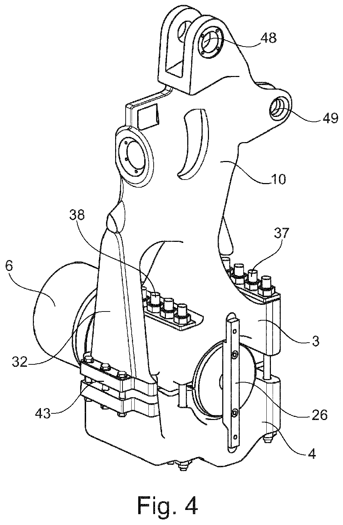

Die perspektivische Ansicht des Hydraulikhebels 10 nach Figur 4 zeigt ergänzend zu den Figuren 1 und 2 die Verspanneinrichtungen 38, 39 mit im Beispiel reihenförmiger Anordnung von Schraubbolzen 37.

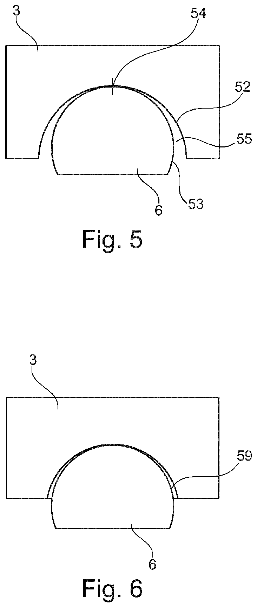

Die Darstellung nach Fig. 5 ist rein schematisch und verdeutlicht den etwas größeren Durchmesser des oberen Klemmteiles 3 an der Innenfläche 52 in Relation zum Durchmesser der Außenfläche 53 der im Schnitt kreisförmigen Welle 6, so dass eine Art Sichelspalt 55 besteht.
Zu Beginn des Verspannens der beiden Klemmteile 3, 4 gegeneinander besteht daher ein geringfügiger sichelartiger Spalt aufgrund der unterschiedlichen Durchmesser, so dass der Verspannvorgang von einer Art Linienkontakt bei 54 zu einem Endzustand nach Fig. 6 mit weitestgehend flächenmäßiger Verspannung des Klemmteils 3 gegenüber der Welle 6 beziehungsweise der dazwischen aufgebrachten Halbschale realisiert wird.

Die Steifigkeit der Klemmteile 3, 4 sowie die durch die Verspanneinrichtungen 38, 39 aufgebrachte Klemmkraft ist so abgestimmt, dass der Sichelspalt 55 (Fig. 5) nur bis zu einem minimalen Restspalt 59 (Fig. 6) geschlossen wird. Diese Maßnahme dient der Vermeidung von hohen Spannungsspitzen am Ende der Sitzflächen, die entstehen können, wenn sich die Endkanten des Klemmteils 3 beziehungsweise 4 in die Oberfläche der Welle 6 eingraben. Dies könnte insbesondere beim Aufbringen hoher Torsionslasten geschehen, was durch die vorgenannte Maßnahme vermieden wird.

Empirisch konnte ermittelt werden, dass die Formgestaltung des Hydraulikhebels 10, insbesondere nach Fig. 1, einen wesentlichen Vorteil bei der möglichst gleichmäßigen Übertragung der Torsions- und Drehmomente auf die beiden Klemmteile 3, 4 mit sich bringt. Hierzu ist es zweckmäßig die Konturen des mittleren Hebelsteges 31 und des äußeren Hebelsteges 32 zugewandt so zu gestalten, dass in etwa eine P-Form erreicht werden kann.

Die Realisierung der demontierbaren Nabenverbindung, insbesondere mit der beanspruchen Reibschlussverbindung zwischen Hydraulikhebel und Schwinghebelwelle oder -achse einer Mahlwalze erlaubt daher eine im Vergleich zur gegenwärtigen Auslegung gewichtssparende und kostengünstige Realisierung, die es auch gestattet, hohe Drehmomente zwischen Hydraulikhebel und Welle beziehungsweise Achse gleichmäßig zu übertragen.

## Patentansprüche

1. Demontierbare Nabenverbindung mit einer Welle (6) oder Achse,
wobei die Nabenverbindung als Reibschlussverbindung ausgelegt ist und die Nabenverbindung ein Nabenbauteil (2) mit einem unteren (4) und einem oberen Klemmteil (3) aufweist,
wobei das untere (4) und obere Klemmteil (3) mittels mindestens zwei Spanneinrichtungen (38, 39) auf der Welle (6) oder Achse verspannbar sind,
wobei die Reibschlussverbindung zwischen den zwei Klemmteilen (3, 4) des Nabenbauteils (2) und der Welle (6) oder Achse als Mikroverzahnung mittels einer reibwerterhöhenden Schicht, ausgelegt ist,
**dadurch gekennzeichnet,**
**dass** eine indirekte Mikroverzahnung vorgesehen ist, und
**dass** die indirekte Mikroverzahnung mittels zweier zwischen den zwei Klemmteilen (3, 4) und der Welle (6) oder Achse vorgesehener Halbschalen (8, 9), die mit einer Hartpartikelbeschichtung versehen sind, ausgebildet ist.

2. Nabenverbindung nach Anspruch 1,
**dadurch gekennzeichnet,**
**dass** die Halbschalen (8, 9) winkelmäßig einen Bereich von etwa 160° bis 175° überdecken.

3. Nabenverbindung nach Anspruch 1 oder 2,
**dadurch gekennzeichnet,**
**dass** die Halbschalen (8, 9) zwei oder mehr Halbschalenstreifen aufweisen.

4. Nabenverbindung nach Anspruch 3,
**dadurch gekennzeichnet,**
**dass** die gegen die Halbschalen oder Halbschalenstreifen verspannten Flächen der Klemmteile (3, 4) Ränder mit tieferen Hinterschneidungen (18, 19) aufweisen.

5. Nabenverbindung nach einem der Ansprüche 3 bis 4,
**dadurch gekennzeichnet,**
**dass** der Durchmesser der zwei Klemmteile (3, 4) des Nabenbauteiles (2) geringfügig größer ist, als der Nenndurchmesser der Außenfläche der Halbschalen (8, 9) oder Halbschalenstreifen.

6. Nabenverbindung nach einem der Ansprüche 1 bis 5,
**dadurch gekennzeichnet,**
**dass** die Spanneinrichtungen (38, 39) der zwei Klemmteile (3, 4) mehrere Bolzen (37) oder Schrauben, insbesondere als Bolzen- oder Schraubenreihen, aufweisen.

7. Nabenverbindung nach einem der Ansprüche 1 bis 6,
**dadurch gekennzeichnet,**
**dass** die Hartpartikelbeschichtung als Hartpartikel, insbesondere als Diamantoder Silizium-Karbid-Partikel, in einer Nickelmatrix oder als Schicht auf Wolfram-Karbid-Basis ausgelegt ist.

8. Nabenverbindung nach einem der Ansprüche 3 bis 7,
**dadurch gekennzeichnet,**
**dass** die Halbschalen (8, 9) oder Halbschalenstreifen eine Materialstärke von etwa 1 mm bis 10 mm aufweisen.

9. Nabenverbindung nach einem der Ansprüche 3 bis 8 für eine Mahlwalzen-Mühle, zwischen einem Hydraulikhebel (10) und einer Schwinghebelwelle (6) oder - achse einer Mahlwalze,
**dadurch gekennzeichnet,**
**dass** das obere (3) und das untere Klemmteil (4) über die zwei Halbschalen (8, 9) oder deren Halbschalenstreifen mittels, insbesondere zweier, Schraubenreihen (38, 37) auf der Schwinghebelwelle (6) oder -achse verspannt ist,
**dass** die miteinander verspannten zwei Klemmteile (3, 4) einen mittigen Hebelsteg (31) und einen außen liegenden Hebelsteg (32) aufweisen,
**dass** der außen liegende Hebelsteg (32) zwei gegeneinander gerichtete Kontaktflächen (35, 36) des oberen (3) und unteren Klemmteils (4) aufweist, die während des Verspannens der Klemmteile (3, 4) gegen die Halbschalen (8, 9) oder Halbschalenstreifen, gegeneinander vorspannbar sind.

10. Nabenverbindung nach Anspruch 9,
**dadurch gekennzeichnet,**
**dass** in Achsrichtung der Welle (6) gesehen der Hydraulikhebel (10) im Bereich zwischen mittlerem (31) und außen liegendem Hebelsteg (32) eine etwa P-förmige Öffnung (40) aufweist.

11. Nabenverbindung nach Anspruch 9 oder 10,
**dadurch gekennzeichnet,**
**dass** der Hydraulikhebel (10) aus einem Gussmaterial, insbesondere Sphäroguss, besteht.

12. Nabenverbindung nach einem der Ansprüche 9 bis 11,
**dadurch gekennzeichnet,**
**dass** zum weiteren Vorspannen der gegeneinander gerichteten Kontaktflächen (35, 36) eine Vorspanneinrichtung (43), insbesondere mit zwei oder mehreren Schraubbolzen, vorgesehen ist.

13. Montageverfahren für eine Nabenverbindung mit Welle (6) oder Achse, nach einem der Ansprüche 3 bis 12,
**gekennzeichnet durch**,
a) Aufsetzen der Halbschalen (8, 9) oder Halbschalenstreifen auf die Welle (6) oder Achse,
b) Fixieren der Halbschalen (8, 9) oder Halbschalenstreifen auf die Welle (6) oder Achse, insbesondere mit einem Halteband,
c) Aufsetzen und Anordnen des oberen (3) und unteren Klemmteils (4) des Nabenbauteils (2) auf und um die Halbschalen (8, 9) oder Halbschalenstreifen,
d) Anordnen einer Montageeinrichtung, insbesondere Montageleiste, auf der Stirnseite der Welle zum winkelmäßigen und axialen Ausrichten der Klemmteile 3, 4,
e) gleichmäßiges Verspannen der zwei Klemmteile (3, 4) gegeneinander mittels mehrerer Spanneinrichtungen (38, 39) gegen die Halbschalen (8, 9) oder Halbschalenstreifen und die Welle (6) oder Achse, bis zu einem Restspalt (29) zwischen den zwei Klemmteilen (3, 4).

14. Montageverfahren nach Anspruch 13
für eine Nabenverbindung mit Welle oder Achse nach Anspruch 9 und 12,
**dadurch gekennzeichnet,**
**dass** das Vorspannen der zwei Kontaktflächen (35, 36) des außen liegenden Hebelsteges (32) gegeneinander mittels einer Vorspanneinrichtung (43) erfolgt.

15. Montageverfahren nach Anspruch 13 oder 14
**dadurch gekennzeichnet,**
**dass** das Verspannen der zwei Klemmteile (3, 4) gegeneinander mit einem weitgehenden Linienkontakt gegenüber den Halbschalen (8, 9) oder Halbschalenstreifen beginnt und
ohne wesentliches Gleiten der Halbschalen (8, 9) oder Halbschalenstreifen relativ zu den Klemmteilen (3, 4) gleichmäßig über den 180°-Bereich fortgesetzt wird.

## Claims

1. Removable hub connection with a shaft (6) or axle,
wherein the hub connection is designed as a frictional connection,
and the hub connection has a hub component (2) with a lower (4) and an upper clamping part (3),
wherein the lower (4) and the upper clamping part (3) can be tightened by means of at least two tightening means (38, 39) on the shaft (6) or axle,
wherein the frictional connection between the two clamping parts (3, 4) of the hub component (2) and the shaft (6) or axle is designed as a micro-toothing by means of a coefficient of friction increasing layer
**characterised in that**
an indirect micro-toothing is provided, and
the indirect micro-toothing is formed by means of two half shells (8, 9), provided between the two clamping parts (3, 4) and the shaft (6) or axle, which are provided with a hard particle coating.

2. Hub connection according to claim 1,
**characterised in that**
the half shells (8, 9) overlap in angular terms a region of approximately 160° to 175°.

3. Hub connection according to claim 1 or 2,
**characterised in that**
the half shells (8, 9) have two or more half shell strips.

4. Hub connection according to claim 3,
**characterised in that**
the areas of the clamping parts (3, 4) tightened against the half shells or half shell strips have edges with deeper undercuts (18, 19).

5. Hub connection according to one of claims 3 to 4,
**characterised in that**
the diameter of the two clamping parts (3, 4) of the hub component (2) is slightly larger than the nominal diameter of the outer area of the half shells (8, 9) or half shell strips.

6. Hub connection according to one of claims 1 to 5,
**characterised in that**
the tightening means (38, 39) of the two tightening parts (3, 4) have a plurality of bolts (37) or screws, in particular as series of bolts or screws.

7. Hub connection according to one of claims 1 to 6,
**characterised in that**
the hard particle coating is designed as hard particles, in particular as diamond or silicon carbide particles, in a nickel matrix or as a layer on a tungsten carbide base.

8. Hub connection according to one of claims 3 to 7,
**characterised in that**
the half shells (8, 9) or half shell strips have a material thickness of approximately 1 mm to 10 mm.

9. Hub connection according to one of claims 3 to 8 for a grinding roller mill, between a hydraulic lever (10) and a rocker arm shaft (6) or axle of a grinding roller, **characterised in that**
the upper (3) and the lower clamping part (4) are tightened via the two half shells (8, 9) or their half shell strips by means of, in particular two, series of screws (38, 37) on the rocker arm shaft (6) or axle,
the two clamping parts (3, 4) tightened with each other have a central lever web (31) and an outer lying lever web (32),
the outer lying lever web (32) has two contact areas (35, 36), which are orientated against each other, of the upper (3) and lower clamping part (4) which can be pretightened against each other during the tightening of the clamping parts (3, 4) against the half shells (8, 9) or half shell strips.

10. Hub connection according to claim 9,
**characterised in that**
as seen in the axial direction of the shaft (6), the hydraulic lever (10) has an approximately P-shaped opening (40) in the region between the central (31) and the outer lying lever web (32).

11. Hub connection according to claim 9 or 10,
**characterised in that**
the hydraulic lever (10) consists of a casting material, in particular spheroidal casting.

12. Hub connection according to one of claims 9 to 11,
**characterised in that**
a pre-tightening means (43), in particular with two or more screw bolts, is provided for further pre-tightening of the contact areas (35, 36) orientated against each other.

13. Assembly method for a hub connection with a shaft (6) or axle, according to one of claims 3 to 12,
**characterised by**
a) placing the half shells (8, 9) or half shell strips on the shaft (6) or axle,
b) fixing the half shells (8, 9) or half shell strips on the shaft (6) or axle in particular with a holding strap,
c) placing and arranging the upper (3) and lower clamping part (4) of the hub component (2) on and around the half shells (8, 9) or half shell strips,
d) arranging an assembly means, in particular an assembly strip, on the front side of the shaft for the angular and axial orientation of the clamping parts (3, 4),
e) even tightening of the two clamping parts (3, 4) against each other by means of a plurality of tightening means (38, 39) against the half shells (8, 9) or half shell strips and the shaft (6) or axle as far as a residual gap (29) between the two clamping parts (3, 4).

14. Assembly method according to claim 13,
**characterised in that**
the pre-tightening of the two contact areas (35, 36) of the outer lying lever web (32) against each other is realised by means of a pre-tightening means (43).

15. Assembly method according to claim 13 or 14,
**characterised in that**
the tightening of the two clamping parts (3, 4) against each other begins with an extensive line contact with respect to the half shells (8, 9) or half shell strips and is continued without significant sliding of the half shells (8, 9) or half shell strips relative to the clamping parts (3, 4) evenly over the 180° range.

## Revendications

1. Jonction de moyeu démontable avec un arbre (6) ou axe
dans lequel la jonction de moyeu se présente sous la forme d'une jonction par friction et la jonction de moyeu présente un composant de moyeu (2) avec une partie de serrage (4) inférieure et une partie de serrage (3) supérieure,
dans lequel les parties de serrage inférieure (4) et supérieure (3) peuvent être mises sous tension au moyen d'au moins deux dispositifs de serrage (38, 39) sur l'arbre (6) ou axe,
dans lequel la jonction par friction entre les deux parties de serrage (3, 4) du composant de moyeu (2) et l'arbre (6) ou axe se présente sous la forme d'une microdenture au moyen d'une couche augmentant le coefficient de friction,
**caractérisée en ce**
**qu'**une microdenture indirecte est prévue, et
**que** la microdenture indirecte est réalisée au moyen de deux demi-coques (8, 9) prévues entre les deux parties de serrage (3, 4) et l'arbre (6) ou axe qui sont pourvues d'un revêtement en particules dures.

2. Jonction de moyeu selon la revendication 1,
**caractérisée en ce**
**que** les demi-coques (8, 9) recouvrent angulairement une zone d'environ 160° à 175°.

3. Jonction de moyeu selon la revendication 1 ou 2,
**caractérisée en ce**
**que** les demi-coques (8, 9) présentent deux bandes de demi-coques ou plus.

4. Jonction de moyeu selon la revendication 3,
**caractérisée en ce**
**que** les surfaces serrées contre les demi-coques ou bandes de demi-coque des parties de serrage (3, 4) présentent des bords avec des contre-dépouilles plus profondes (18, 19).

5. Jonction de moyeu selon l'une quelconque des revendications 3 à 4,
**caractérisée en ce**
**que** le diamètre des deux parties de serrage (3, 4) du composant de moyeu (2) est légèrement supérieur au diamètre nominal de la surface extérieure des demi-coques (8, 9) ou bandes de demi-coque.

6. Jonction de moyeu selon l'une quelconque des revendications 1 à 5,
**caractérisée en ce**
**que** les dispositifs de serrage (38, 39) des deux parties de serrage (3, 4) présentent plusieurs boulons (37) ou vis, en particulier comme rangées de boulon ou vis.

7. Jonction de moyeu selon l'une quelconque des revendications 1 à 6,
**caractérisée en ce**
**que** le revêtement en particules dures se présente sous la forme de particules dures, en particulier comme particules de carbure de silicium ou diamant, dans une matrice de nickel ou comme couche à base de carbure de tungstène.

8. Jonction de moyeu selon l'une quelconque des revendications 3 à 7,
**caractérisée en ce**
**que** les demi-coques (8, 9) ou bandes de demi-coque présentent une épaisseur de matériau d'environ 1 mm à 10 mm.

9. Jonction de moyeu selon l'une quelconque des revendications 3 à 8 pour un broyeur à cylindre broyeur entre un levier hydraulique (10) et un arbre ou axe de levier oscillant (6) d'un cylindre broyeur,
**caractérisée en ce**
**que** la partie de serrage supérieure (3) et inférieure (4) sont mises sous tension par le biais des deux demi-coques (8, 9) ou leurs bandes de demi-coque au moyen, en particulier de deux, rangées de vis (38, 37) sur l'arbre ou axe de levier oscillant (6),
**que** les deux parties de serrage (3, 4) mises sous tension l'une avec l'autre présentent une nervure de levier médiane (31) et une nervure de levier extérieure (32),
**que** la nervure de levier extérieure (32) présente deux surfaces de contact (35, 36) de la partie de serrage supérieure (3) et de la partie de serrage inférieure (4) dirigées l'une contre l'autre, qui peuvent être précontraintes l'une contre l'autre pendant la mise sous tension des parties de serrage (3, 4) contre les demi-coques (8, 9) ou bandes de demi-coque.

10. Jonction de moyeu selon la revendication 9,
**caractérisée en ce**
**que** le levier hydraulique (10), vu dans le sens axial de l'arbre (6), présente dans la zone entre la nervure de levier médiane (31) et extérieure (32) une ouverture (40) à peu près en forme de P.

11. Jonction de moyeu selon la revendication 9 ou 10,
**caractérisée en ce**
**que** le levier hydraulique (10) se compose d'un matériau de coulage, en particulier d'une fonte nodulaire.

12. Jonction de moyeu selon l'une quelconque des revendications 9 à 11,
**caractérisée en ce**
**que** pour la suite de la précontrainte des surfaces de contact (35, 36) dirigées l'une contre l'autre un dispositif de précontrainte (43) est prévu en particulier avec deux ou plusieurs boulons filetés.

13. Procédé de montage pour une jonction de moyeu avec un arbre (6) ou axe, selon l'une quelconque des revendications 3 à 12,
**caractérisée par**
a) le placement des demi-coques (8, 9) ou bandes de demi-coque sur l'arbre (6) ou axe,
b) la fixation des demi-coques (8, 9) ou bandes de demi-coque sur l'arbre (6) ou axe, en particulier avec une bande de retenue,
c) le placement et l'agencement de la partie de serrage supérieure (3) et de la partie de serrage inférieure (4) du composant de moyeu (2) sur et autour des demi-coques (8, 9) ou bandes de demi-coques,
d) l'agencement d'un dispositif de montage, en particulier une bande de montage, sur le côté avant de l'arbre pour l'orientation angulaire et axiale des parties de serrage (3, 4),
e) la mise sous tension uniforme des deux parties de serrage (3, 4) l'une contre l'autre au moyen de plusieurs dispositifs de serrage (38, 39) contre les demi-coques (8, 9) ou bandes de demi-coque et l'arbre (6) ou axe, jusqu'à une fente résiduelle (29) entre les deux parties de serrage (3, 4).

14. Procédé de montage selon la revendication 13,
pour une jonction de moyeu avec arbre ou axe selon les revendications 9 et 12,
**caractérisée en ce**
**que** la précontrainte des deux surfaces de contact (35, 36) de la nervure de levier extérieure (32) l'une contre l'autre est effectuée au moyen d'un dispositif de précontrainte (43).

15. Procédé de montage selon la revendication 13 ou 14,
**caractérisée en ce**
**que** la mise sous tension des deux parties de serrage (3, 4) l'une contre l'autre commence par un large contact linéaire par rapport aux demi-coques (8, 9) ou bandes de demi-coque et
est poursuivie uniformément sur la zone de 180° sans glissement sensible des demi-coques (8, 9) ou bandes de demi-coque relativement aux parties de serrage (3, 4).
